**Europäisches Patentamt**

**European Patent Office**

**Office européen des brevets**

(19)

(11)   **EP 1 467 287 A2**

## (12)   EUROPEAN PATENT APPLICATION

(43) Date of publication:
**13.10.2004   Bulletin 2004/42**

(51) Int Cl.7: **G06F 17/13**

(21) Application number: **04396027.7**

(22) Date of filing: **08.04.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventors:<br>• **NEITTAANMÄKI, Pekka**<br>  **40100 JYVÄSKYLÄ (FI)**<br>• **REPIN, Sergey**<br>  **195220 St.-PETERSBURG (RU)**<br>• **KOROTOV, Sergey**<br>  **40500 JYVÄSKYLÄ (FI)** |
| (30) Priority: **11.04.2003  FI  20030550** | |
| (71) Applicants:<br>• **NEITTAANMÄKI, Pekka**<br>  **40100 JYVÄSKYLÄ (FI)**<br>• **REPIN, Sergey**<br>  **195220 St.-PETERSBURG (RU)**<br>• **KOROTOV, Sergey**<br>  **40500 JYVÄSKYLÄ (FI)** | (74) Representative: **Helke, Kimmo Kalervo**<br>**Kespat Oy,**<br>**P.O. Box 601**<br>**40101 Jyväskylä (FI)** |

(54)   **Verification of the accuracy of numerical data in the solution of a boundary value problem**

(57)    The present invention relates to an estimation of computational errors appearing in the finite element calculations, particularly to method, system and program product for verification of the accuracy of numerical data measured in terms of problem-oriented criteria, where the numerical data are computed in the process of solution of a boundary value problem. In addition to the primal problem a certain adjoin problem is formed and solved. The method is based on two principles:

(a) the original and adjoint problems are solved on non-coinciding meshes, and
(b) the term presenting the product of errors arising in the primal and adjoint problems is estimated by the gradient recovery technique.

Fig. 13

EP 1 467 287 A2

**Description**

BACKGROUND OF THE INVENTION

1. Field of the Invention

The present invention relates to an estimation of computational errors appearing in the finite element calculations, particularly to method, system and program product for verification of the accuracy of numerical data measured in terms of problem-oriented criteria, where the numerical data are computed in the process of solution of a boundary value problem, which is defined by one or several partial differential equations (PDEs), governing an unknown physical quantity in a solution domain, and boundary conditions.

2. Description of the Prior Art

Finite Element Method (FEM) is a very powerful and nowadays the most popular numerical method for solving the partial differential equations (PDEs). The concept of FEM consists of discretizing the solution domain into a set (called the mesh) consisting of small elements with simple shapes. The mesh is characterized by a number of degrees of freedom (DOF), we denote it by n in the text. In structural mechanics, the DOF represent the virtual displacements on points (nodes), where the (finite) elements are constructed. The finite element (FE) solution is built from the solution of a system of n linear algebraic equations. Engineers have years of experience and practice in the finite element calculations and analysis. When designing e.g. a new structure, the mechanical engineer can use the FEM to calculate a tension distribution in a structure (e.g., in frame, crankshaft or beam). Normally, there are a few critical areas to be carefully analysed. An ordinary approach is to perform computations on more and more dense mesh, hoping that the computed approximate solutions are becoming more and more closer to the exact solution (which is normally not known at all). But the closeness of such calculated approximations to the exact solution can be illusory in many respects, and the computed data (numbers) can be far from the truth, thus being rather unreliable and useless. A solution of this problem is an availability of certain tools (software) for the engineers and designers for explicit control of the error between the exact solution and the computed approximation. A development of theoretical backgrounds and various techniques for building of such tools (called a priori error estimates) has been a main topic in the modern numerical analysis last two decades. For the finite element methods, such a priori error estimates are usually obtained either by estimating a weak norm of the residual [1] or by using special postprocessing procedures [5]. For the Galerkin (finite element) approximations of linear elliptic problems, they estimate the error in the global (energy) norm and also provide an error indicators that are further used in various mesh adaptive procedures. Global error estimates give a general presentation on the quality of an approximate solution and a stopping criteria. However, from the viewpoint of engineering purposes, such an information is often not sufficient. In many cases, the engineers are interested not in the value of the total error, but, as was mentioned above, in errors over certain critical areas: subdomains, lines, or at special points. A possible way of estimating such type of errors is to introduce a certain linear functional $\ell$ associated with a critical area, where $\ell(u)$ is often called as a problem-oriented criterion or "quantity of interest", and to obtain an estimate for the value of $\ell(u-v)$, where u is the exact solution and v is the approximate one. Known methods [2] find estimates for $\ell(u-u_h)$ for the Galerkin approximations $u_h$ by employing an auxiliary (often called as adjoint) problem, whose right-hand side is formed by the functional $\ell$. If the Galerkin approximation of the adjoint problem is computed on the same mesh as $u_h$, then the functional value $\ell(u-u_h)$ is expressed via a certain integral functional, which can be estimated by using, e.g., the "equilibrated residual method" [4]. However, all the results obtained by now are rather far from being satisfactory.

What is needed is a reliable and effective method, system and program product for verification of the accuracy of numerical data measured in terms of problem-oriented criteria.

**OBJECTS AND SUMMARY OF THE INVENTION**

We present a new method for estimation of the "quantities of interest" [3] as well as a system and a program product for implementing the method. It is based on two principles:

    (a) the original and adjoint problems are solved on non-coinciding meshes, and
    (b) the term presenting the product of errors arising in the primal and adjoint problems is estimated by the gradient recovery technique widely used in various applied problems.

These features differ our method from others, who are usually assumed that the Galerkin approximations of the primal and auxiliary (adjoint) problems should be computed on the same finite dimensional subspaces.

Using the fact of non-coincidence of the meshes, we obtain a new estimator which is a sum of two terms ($E_0$) and ($E_1$), where the first term ($E_0$) contains the major part of the "quantity of interest", but vanishes whenever the mesh coincide. The effectivity of the method is demonstrated for one- and two-dimensional problems, part of which is presented in the text later on.

In the preferred embodiment the estimator (E) is a sum of the first term ($E_0$) and the second term ($E_1$), where

- the first term ($E_0$) is computable as a sum of three parts, where the first part is an integral over the solution domain ($\Omega$) of a product of the source function ($f$) and the second approximation ($v_\tau$), the second part is an integral over the Neumann boundary ($\Gamma_2$) of a product of the boundary function ($g$) and the second approximation ($v_\tau$), and the third part is a minus integral over the solution domain ($\Omega$) of an energy scalar products of the gradients of the first ($u_h$) and the second ($v_\tau$) approximations, and
- the second term ($E_1$) is the integral over the solution domain ($\Omega$) of the energy scalar product of two vector-functions, where the first vector-function is the difference between the gradient of the first approximation ($u_h$) and the averaged gradient of the first approximation ($u_h$), and the second vector-function is the difference between the gradient of the second approximation ($v_\tau$) and the averaged gradient of the second approximation ($v_\tau$).

The effectivity of the method proposed, strongly increases when one is interested not in a single solution of the primal problem for a concrete data, but analyzes a series of approximate solutions for a certain set of boundary conditions and various right-hand sides (and such a situation is very typical in the engineering design, when it is necessary to model the behaviour of a construction for various working regimes). In this case, the adjoint problem must be solved only once for each "quantity of interest", and its solution can be further used in testing the accuracy of approximate solutions of various primal problems (i.e. with various source functions).

The present invention can be implemented using a computer. An exemplary computer includes one or more processors, memory (like ROM, RAM and hard-drive), input device (like keyboard, floppy disk drive) and output device (like display and printer). Method can be implemented directly for any software using FEM as a computational tool. Without any new software the first and second approximations as well as computing the estimator must be executed separately. We present new software, which includes all necessary routines and interface for an implementation.

## BRIEF DESCRIPTION OF THE DRAWINGS

In the following, the invention is examined with the aid of the accompanying drawings and examples. In the drawings illustrates a solution domain with basic denotations for the diffusion type problem

| | |
|---|---|
| Figure 1 | illustrates a solution domain with basic denotations |
| Figure 2 | illustrates a part of standard finite element mesh and a patch associated with one of its nodes |
| Figure 3 | illustrates an elastic body as a solution domain with basic denotations for the linear elasticity problem |
| Figure 4 | illustrates main desktop of CHECKER-software |
| Figure 5 | illustrates setting the domain and the zone of interest in Matlab® PDE Toolbox |
| Figure 6 | illustrates the export window of Matlab® PDE Toolbox for exporting domain data and formula data for the primal problem to CHECKER-software |
| Figure 7 | illustrates setting the boundary conditions in Matlab® PDE Toolbox |
| Figure 8 | illustrates the export window for exporting data of the zone of interest and boundary conditions to CHECKER-software |
| Figure 9 | illustrates the process of solving the primal problem in CHECKER-software |
| Figure 10 | illustrates the process of solving the auxiliary (adjoint) problem in CHECKER-software |
| Figure 11 | illustrates the process of solving the auxiliary problem with a local refinement in the zone of interest in CHECKER-software |
| Figure 12 | illustrates CHECKER desktop with visible results of |
| Figure 13 | illustrates a block diagram of CHECKER-software with short step references A - E |
| Figure 14 | illustrates the source function of the one-dimensional test problem |
| Figure 15 | illustrates the exact and the approximate solutions and the zone of interest of the one-dimensional test problem |
| Figure 16 | illustrates the behaviour of the effectivity index in various mesh parameters |
| Figure 17 | illustrates the meshes $T_h$ and $T_\tau$ for the one-dimensional test problem |
| Figure 18 | illustrates a flowchart for computing an approximation and an error estimation |

EP 1 467 287 A2

**DETAILED DESCRIPTION OF THE PREFERRED EMBODIMENTS**

Table of contents

I. Model theory

A. INTRODUCTION
B. PROBLEM FORMULATION - DIFFUSION-TYPE PROBLEM

1. Mathematical model
2. Finite element solution
3. Problem-oriented criterion
4. Error estimation
5. Technique for the error estimation in terms of problem-oriented criteria
6. Auxiliary problem and its finite element solution
7. Gradient averaging procedures
8. Formula for calculation of the estimator
9. Error estimation algorithm

C. PROBLEM FORMULATION - LINEAR ELASTICITY PROBLEM

1. Mathematical model
2. Finite element solution
3. Problem-oriented criterion
4. Error estimation
5. Technique for the error estimation in terms of problem-oriented criteria
6. Auxiliary problem and its finite element solution
7. Tensor averaging procedures
8. Formula for calculation of the estimator
9. Error estimation algorithm

D. ADVANTAGES OF THE TECHNIQUE

II. IMPLEMENTATION IN A SYSTEM

A. Introduction
B. Presentation of software product with a model

III. MODEL EXAMPLE - ONE DIMENSIONAL CASE

**I MODEL THEORY**

**A - INTRODUCTION**

The method presented below is designed to verify the accuracy of FE approximations, measured in terms of "problem-oriented" criterion that can be chosen by users. The method is applicable to various problems in mechanics and physics embracing diffusion and linear elasticity problems. It can be easily coded and attached as an independent programme-checker to the most of existing educational and industrial codes.

**B - PROBLEM FORMULATION PART - DIFFUSION-TYPE PROBLEM**

**B.1 Mathematical model**

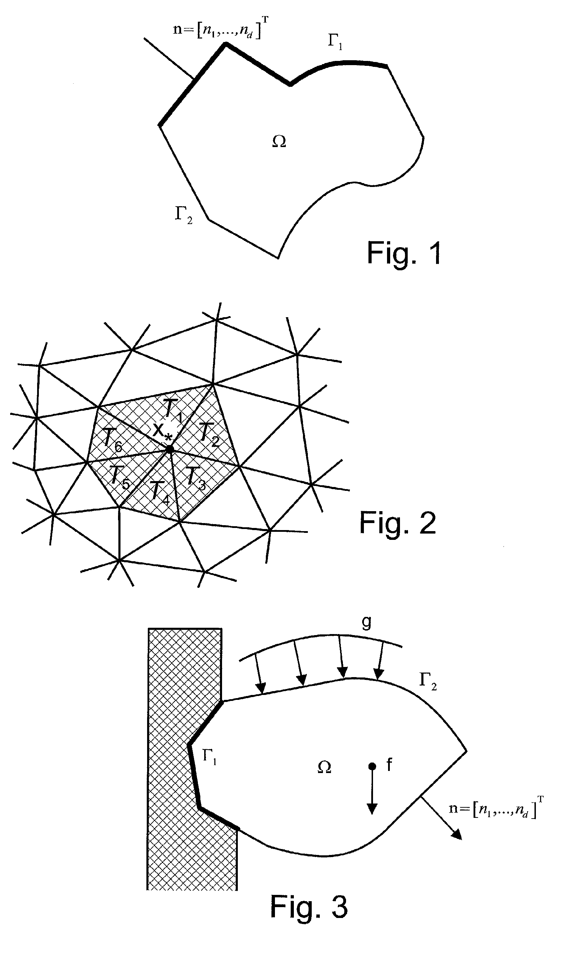

We consider physical process that can be formally modelled in the form of a boundary value problem of elliptic type (BVP) as follows referring to Fig. 1: Find a function $u = u(x_1,...,x_d)$ of $d$ variables $x_1,...,x_d$ such that

$$-\sum_{i,j=1}^{d} \frac{\partial}{\partial x_i}\left(a_{ij}\frac{\partial u}{\partial x_j}\right) = f \quad \text{in} \quad \Omega, \tag{1}$$

$$u = u_0 \text{ on } \Gamma_1, \tag{2a}$$

$$\sum_{i,j=1}^{d} a_{ij}\frac{\partial u}{\partial x_j}n_i = g \quad \text{on} \quad \Gamma_2. \tag{2b}$$

In the above, relation (1) is a process governing equation in the solution domain $\Omega \subset R^d$ , where $a_{ij} = a_{ij}(x_1,...,x_d), i, j = 1,...,d,$ are the given coefficients of the problem that usually describe the diffusion properties of the respective media. This model also applies to stationary magnetic, electric, and temperature field, or some phenomena in the linear elasticity or fluid flow. The function $f = f(x_1,...,x_d)$ can be viewed as a given source function. The coefficients are assumed to be bounded functions and function $f$ is assumed to be square summable. Further, relations (2a) and (2b) are boundary conditions on the boundary $\Gamma$ of $\Omega$, more precisely, they prescribe a behaviour of the solution and its derivatives on two nonintersecting boundary parts $\Gamma_1$ and $\Gamma_2$, respectively, i.e., $\Gamma=\Gamma_1\cup\Gamma_2$ . The function $u_0 = u_0(x_1,...,x_d)$ belongs to the natural energy class of the problem and $g = g(x_1,...,x_d)$ is a square summable function, symbol $n_i$ denotes the $i$-th component of the outward normal vector $\mathbf{n} = \mathbf{n}(x_1,...,x_d)$ to the boundary $\Gamma$, i.e. , $\mathbf{n} = [n_1,...,n_d]^T$ (see Fig. 1).

The above assumptions are not restrictive and cover the bulk of practically meaningful cases.

**B.2 Finite element solution of (1)-(2)**

Let $V_h$ be a finite-dimensional space constructed by means of a selected set of finite element trial functions defined on a standard finite element mesh $T_h$ (called the first mesh) over the solution domain $\Omega$, see Figure 2. We notice that space $V_h$ is chosen so that its functions $w_h$ vanish on $\Gamma_1$.

The first approximation for problem (1)-(2) is defined as a function

$$u_h = u_h (x_1,...,x_d) \in V_h + u_0,$$

such that

$$\int_{\Omega}\sum_{i,j=1}^{d} a_{ij}\frac{\partial u_h}{\partial x_j}\frac{\partial w_h}{\partial x_i}dx = \int_{\Omega}fw_h\,dx + \int_{\Gamma_2}gw_h\,ds \quad \forall w_h \in V_h. \tag{3}$$

**B.3 Problem-oriented criterion**

Users are often interested not only in the overall error $e = u-u_h,$ but also in its local behaviour, e.g., in a certain subdomain $\omega \subset \Omega$. One way to get information about the local behaviour of $u - u_h$ is to measure the error in terms of specially selected problem-oriented criteria on "quantity of interest". One of the most typical criteria of such a type is presented by the integral

$$\int_{\Omega}\varphi(u - u_h)dx, \tag{4}$$

where $\varphi = \varphi(x_1,...,x_d)$ is a selected weight function vanishing outside of the zone of interest.

**B.4 Error estimation**

Error estimators are intended to show the value of the error in the subdomain, which is the most interesting for an engineer. Also they suggest information on that how to improve an approximate solution computed if the accuracy obtained is not sufficient. At this point we note that our estimator is given by the integral whose integrand could serve as the respective indicator. Namely, if the accuracy achieved is not sufficient, then additional degrees of freedom (new elements) must be added in those parts of the solution domain, where the integrand is excessively high.

**B.5 TECHNIQUE FOR THE ERROR ESTIMATION IN TERMS OF PROBLEM-ORIENTED CRITERIA**

To present the technique for estimation of criterion (4), we describe two technical problems that must be previously solved. They consist of finding an approximate solution of an auxiliary problem (so-called adjoint problem) and making a certain post-processing of this solution $v_\tau$, and also making a post-processing of the finite element approximation $u_h$.

**B.6 Auxiliary problem and its finite element solution**

Let $V_\tau$ be the second finite-dimensional space constructed by means of a selected set of finite element trial functions on another standard finite element mesh $T_\tau$ (called the second mesh) over the solution domain $\Omega$. We notice that space $V_\tau$ is chosen so that its functions $w_\tau$ vanish on $\Gamma$, and also that $T_\tau$ need not to coincide with $T_h$, see Figure 2. A part of standard finite element mesh and a patch associated with node.

Consider the auxiliary finite-dimensional problem as follows: Find a function

$$v_\tau = v_\tau(x_1,...,x_d) \in V_\tau,$$

such that

$$\int_\Omega \sum_{i,j=1}^{d} a_{ji} \frac{\partial v_\tau}{\partial x_j} \frac{\partial w_\tau}{\partial x_i} dx = \int_\Omega \varphi w_\tau dx \quad \forall w_\tau \in V_\tau. \tag{5}$$

**B.7 Gradient averaging procedures**

On the first mesh $T_h$, we define the gradient averaging transformation $\mathbf{G_h}$ mapping the gradient of the finite element approximation $u_h$

$$\nabla u_h = [\frac{\partial u_h}{\partial x_1},...,\frac{\partial u_h}{\partial x_d}]^T, \tag{6}$$

which is constant over each element of the finite element mesh, into a vector-valued continuous piecewise affine function

$$G_h(\nabla u_h) = [G_h^1(\nabla u_h),...,G_h^d(\nabla u_h)]^T, \tag{7}$$

by setting each its nodal value as the mean value of $\nabla \mathbf{u_h}$ on all elements of the patch $\mathbf{P}(x_*)$ associated with corresponding node $x_*$ in the mesh $T_h$.

More precisely, let

$$\frac{\partial u_h}{\partial x_i}\Big|_{T_k}$$

denote the value of $i$-th coordinate of gradient $\nabla\mathbf{u_h}$ over triangle $T_k$, let $x_*$ be one of nodes of finite element mesh $T_h$, and let $T_1, ..., T_{N_{x_*}}$ be elements of the mesh having node $x_*$ as one of their vertices. The union of such elements is called the patch and denoted as $\mathbf{P}(x_*)$. (Thus, in terms of Fig. 2, the patch consists of six triangles, i.e., $N_{x_*} = 6$.) Then, we define

$$G_h^i(\nabla u_h)(x_*) = \frac{1}{N_{x_*}} \sum_{T_k \in \mathbf{P}(x_*)} \frac{\partial u_h}{\partial x_i}\Big|_{T_k}, \quad i = 1, ..., d, \tag{8a}$$

or

$$G_h^i(\nabla u_h)(x_*) = \frac{1}{measT_1 + ... + measT_{N_{x_*}}} \sum_{T_k \in \mathbf{P}(x_*)} measT_k \cdot \frac{\partial u_h}{\partial x_i}\Big|_{T_k}, i = 1, ..., d, \tag{8b}$$

where the symbol *meas* denotes the area of corresponding triangle.

Having $G_h^i(\nabla u_h)$ defined at all nodes of the mesh $T_h$, we uniquely define continuous piecewise affine function $G_h^i(\nabla u_h)$ over the whole domain $\Omega$. In this way, the vector-valued continuous piecewise affine function $\mathbf{G_h}(\nabla\mathbf{u_h})$ in (7) is built.

Similarly, on $T_\tau$, we define the *gradient averaging transformation* $\mathbf{G}_\tau$ mapping the *gradient of the finite element approximation* $v_\tau$

$$\nabla \mathbf{v}_\tau = [\frac{\partial v_\tau}{\partial x_1}, ..., \frac{\partial v_\tau}{\partial x_d}]^T, \tag{9}$$

which is constant over each element of the finite element mesh, into a vector-valued continuous piecewise affine function

$$\mathbf{G}_\tau(\nabla \mathbf{v}_\tau) = [G_\tau^1(\nabla v_\tau), ..., G_\tau^d(\nabla v_\tau)]^T, \tag{10}$$

by setting each its nodal value as the mean value of $\nabla\mathbf{v}_\tau$ on all elements of the patch $\mathbf{P}(x_o)$ associated with corresponding node $x_o$ in the mesh $T_\tau$.

More precisely, let

$$\frac{\partial v_\tau}{\partial x_i}\Big|_{T_k}$$

denote the value of $i$-th coordinate of gradient $\nabla\mathbf{v}_\tau$ over triangle $T_k$, let $x_o$ be one of nodes of finite element mesh $T_\tau$, and let $T_1, ..., T_{N_{x_o}}$ be elements of the mesh having node $x_o$ as one of their vertices. The respective patch is denoted as $\mathbf{P}(x_o)$. Then

$$G_\tau^i(\nabla v_\tau)(x_o) = \frac{1}{N_{x_o}} \sum_{T_k \in \mathbf{P}(x_o)} \frac{\partial v_\tau}{\partial x_i}\Big|_{T_k}, \quad i = 1, ..., d. \tag{11a}$$

or

$$G_\tau^i(\nabla v_\tau)(x_o) = \frac{1}{measT_1 + ... + measT_{N_{x_o}}} \sum_{T_k \in \mathbf{P}(x_o)} measT_k \cdot \frac{\partial v_\tau}{\partial x_i}\Big|_{T_k}, i = 1, ..., d. \tag{11b}$$

Having $G^i(\nabla v_\tau)(x_o)$ at all nodes $x_o$, we uniquely define continuous piecewise affine function $G^i(\nabla v_\tau)$ over the whole domain $\Omega^\tau$. In this way, the vector-valued continuous piecewise affine function $\mathbf{G}_\tau(\nabla \mathbf{v}_\tau)$ in (10) is built.

Such averaging transformations are widely used in the finite element calculations. Usually they lead to computationally inexpensive algorithms.

**B.8 Formula for calculation of the estimator**

Our method estimates the quantity (4) by the quantity $E(u_h, v_\tau)$ presented by the following formula:

$$E(u_h, v_\tau) := E_0(u_h,\, v_\tau) + E_1(u_h,\, v_\tau), \tag{12}$$

where

$$E_0(u_h, v_\tau) = \int\limits_\Omega f v_\tau \, dx + \int\limits_{\Gamma_2} g v_\tau \, ds - \int\limits_\Omega \sum_{i,j=1}^d a_{ij} \frac{\partial u_h}{\partial x_j} \frac{\partial v_\tau}{\partial x_i} \, dx, \tag{13}$$

and

$$E_1(u_h, v_\tau) = \int\limits_\Omega \sum_{i,j=1}^d a_{ij} \left( \frac{\partial u_h}{\partial x_j} - G_h^j(\nabla u_h) \right) \left( \frac{\partial v_\tau}{\partial x_i} - G_\tau^i(\nabla v_\tau) \right) dx. \tag{14}$$

The functional $E(u_h, v_\tau)$ is directly computable once the approximations $u_h$ and $v_\tau$ are found.

**B.9. ERROR ESTIMATION ALGORITHM**

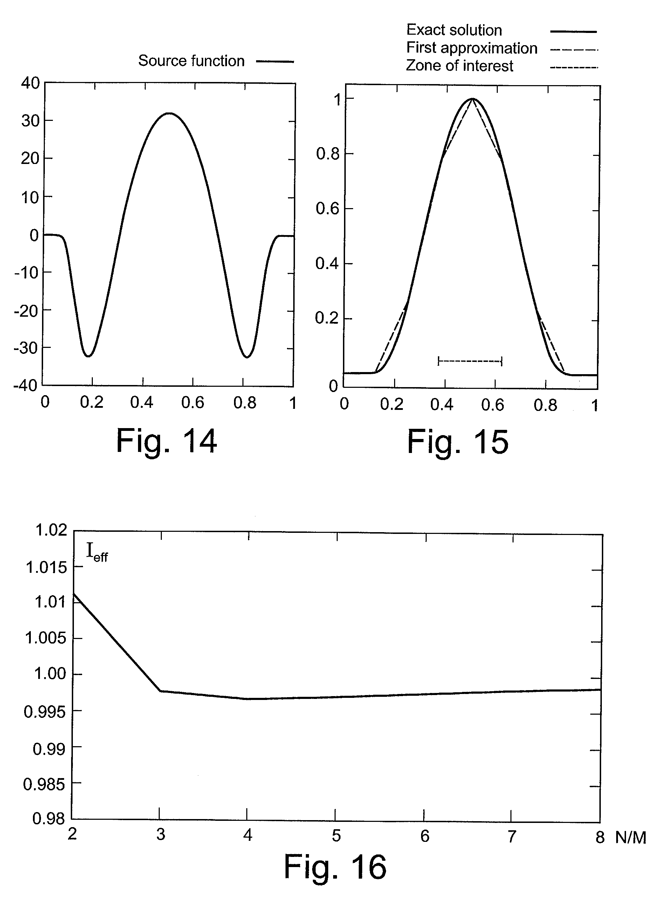

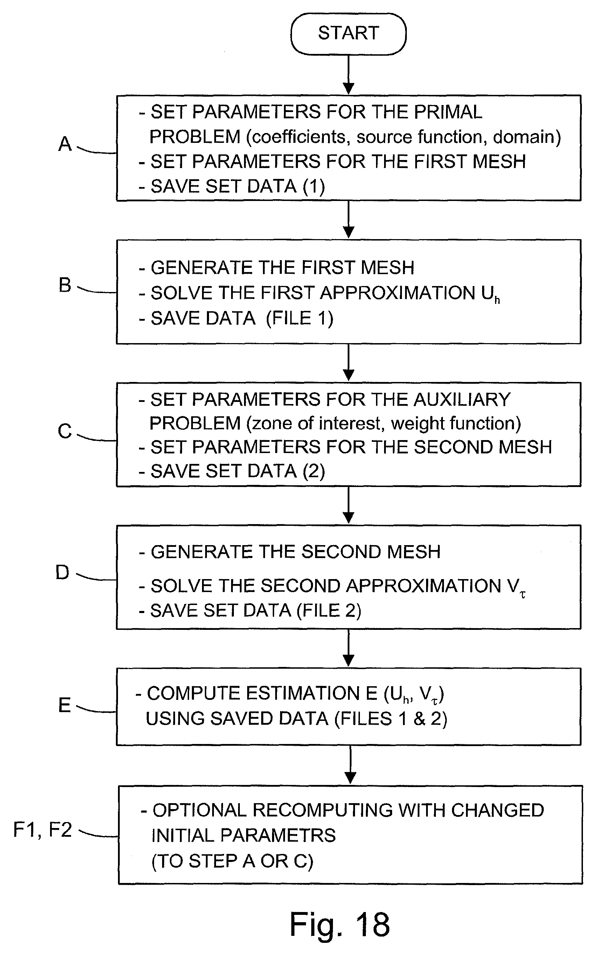

Step 1: Pose a problem of type (1)-(2a,b); (Step A in Figures 13 and 18)
Step 2: Find $u_h$ in (3); (Step B)
Step 3: Select criterion (4), i.e. subdomain $\omega$ and function $\varphi$; (Step C)
Step 4: Solve auxiliary problem (5) and find $v_\tau$; (Step D)
Step 5: Construct/form $\mathbf{G_h}(\nabla \mathbf{u_h})$ by (8a) or (8b); (Estimation
Step 6: Construct/form $\mathbf{G}_\tau(\nabla \mathbf{v}_\tau)$ by (11a) or (11b); (Estimation)
Step 7: Compute $E_0(u_h, v_\tau)$; (Estimation)
Step 8: Compute $E_1(u_h, v_\tau)$; (Estimation)
Step 9: Compute $E(u_h, v_\tau)$; (Estimation)

(Steps 5 - 9 correspond step E in Figures 13 and 18.
Optional step 10: change initial parameters. (Step F1 or F2)

**C - PROBLEM FORMULATION - LINEAR ELASTICITY PROBLEM**

**C.1 Mathematical model**

We consider mechanical problem of elasticity that can be formally presented in the form of a *system of linear elasticity equations* as follows: Find a vector-function (called the *displacement*) $\mathbf{u} = \mathbf{u}(x_1,...,x_d) = [u_1,...,u_d]^T$ of $d$ variables $x_1,...,x_d$ such that, for $i = 1,...,d$ ,

$$-\sum_{j,k,l=1}^{d} \frac{\partial}{\partial x_j}\left(L_{ijkl}\,\varepsilon_{kl}(\mathbf{u})\right)=f_i \quad \text{in} \quad \Omega, \tag{1}$$

$$u_i = u_0^i \text{ on } \Gamma_1, \tag{2a}$$

$$\sum_{j,k,l=1}^{d} n_j\, L_{ijkl}\,\varepsilon_{kl}(\mathbf{u})=g_i \quad \text{on} \quad \Gamma_2. \tag{2b}$$

In the above, relation (1) is a *governing system of equations* in the solution domain (body) $\Omega \subset R^d$, where $L_{ijkl} = L_{ijkl}$ $(x_1,...,x_d), i,j = 1,...,d$, are the given coefficients of the problem that usually describe the elastic properties of the respective body, and the vector-function $\mathbf{f} = \mathbf{f}(x_1,...,x_d)=[f_1,...,f_d]^T$ represents a given body force. The coefficients are assumed to be bounded functions and function $f$ is assumed to be square summable. In addition, the coefficients satisfy the following symmetry conditions

$$L_{jikl} = L_{ijkl} = L_{klij}, \qquad i,j,k,l = 1,...,d. \tag{3}$$

Further, the functions $\varepsilon_{ij}(\mathbf{u}), i,j = 1,...,d,$ are defined as follows

$$\varepsilon_{ij}(\mathbf{u}) = \frac{1}{2}\left(\frac{\partial u_i}{\partial x_j} + \frac{\partial u_j}{\partial x_i}\right), \tag{4}$$

they form the so-called *small strain (or deformation) tensor (d $\times$ d matrix)* $\varepsilon(\mathbf{u})$.

The relations (2a) and (2b) are *boundary conditions* on the boundary $\Gamma$ of $\Omega$, more precisely, they prescribe a behaviour of the solution and its derivatives on two nonintersecting boundary parts $\Gamma_1$ and $\Gamma_2$, respectively, i.e., $\Gamma = \Gamma_1 \cup \Gamma_2$. The vector-functions $\mathbf{u}_0 = \mathbf{u}_0(x_1,...,x_d)=[u_0^1,...,u_0^d]^T$ represents the external force and belongs to natural energy class of the problem and $\mathbf{g} = \mathbf{g}(x_1,...,x_d) =[g_1,...,g_d]^T$ is a square summable function. The function $\mathbf{g}$ represents the external force. The symbol $n_i$ denotes the *i*-th component of the outward normal vector $\mathbf{n} = \mathbf{n}(x_1,...,x_d)$ to the boundary $\Gamma$, i.e., $\mathbf{n} = [n_1,...,n_d]^T$ (see Fig. 3).

Above assumptions are not restrictive and cover the bulk of practically meaningful cases.

**C.2 Finite element solution of (1)-(2)**

Let $\mathbf{V_h}$ be a finite-dimensional space constructed by means of a selected set of finite element trial *(d* -dimensional) vector-functions defined on commonly-used finite element mesh $T_h$ over $\Omega$. We notice that space $\mathbf{V_h}$ is chosen so that its functions $\mathbf{w_h}$ vanish on $\Gamma_1$.

The finite element approximation for problem (1)-(2) is defined then as a vector-function

$$u_h = u_h\,(x_1,...,x_d) = [u_h^1,...,u_h^d]^T \in V_h + u_0,$$

such that

$$\int_{\Omega} \sum_{i,j,k,l=1}^{d} L_{ijkl}\varepsilon_{ij}(\mathbf{u_h})\varepsilon_{kl}(\mathbf{w_h})\,dx = \int_{\Omega}\mathbf{f}\cdot\mathbf{w_h}\,dx + \int_{\Gamma_2}\mathbf{g}\cdot\mathbf{w_h}\,ds \quad \forall\mathbf{w_h}\in\mathbf{V_h}\,, \tag{5}$$

where the symbol "dot" denotes the standard vector multiplication.

### C.3 Problem-oriented criterion

Users are often interested not only in the overall error **e = u-u$_h$,** but also in its local behaviour, e.g., in a certain subdomain $\omega \subset \Omega$.

One way to get an information about the local behaviour of **u - u$_h$** is to measure the error in terms of specially selected *problem-oriented criteria.*

One of the most typical criteria of such a type is presented by the integral

$$\int_\Omega \Phi \cdot (\mathbf{u} - \mathbf{u_h})dx, \qquad (6)$$

where $\Phi = \Phi(x_1,...,x_d) = [\varphi_1,..., \varphi_d]^T$ is a selected vector-function such that $\Phi$ vanishes outside of the zone of interest ($\omega$).

### C.4 Error estimation

see Section B4.

### C.5 TECHNIQUES FOR THE ERROR ESTIMATION IN TERMS OF PROBLEM-ORIENTED CRITERIA

To present the techniques for estimation of criterion given by (6), we need first to describe two technical problems, that must be previously solved. They consist of finding an approximate solution of an auxiliary problem and making a certain post-processing of solutions of this auxiliary problem and also of finite element approximation **u$_h$.**

### C.6 Auxiliary problem and its finite element solution

Let **V$_\tau$** be another finite-dimensional space constructed by means of a selected set of finite element trial functions on another standard finite element mesh **T$_\tau$** over $\Omega$. We notice that space **V$_\tau$** is chosen so that its functions **w$_\tau$** vanish on $\Gamma$, and also that **T$_\tau$** need not to coincide with **T$_h$.**

Consider the auxiliary finite-dimensional problem as follows: Find a function

$$v_\tau = v_\tau(x_1,...,x_d) \in V_\tau,$$

such that

$$\int_\Omega \sum_{i,j,k,l=1}^{d} L_{ijkl}\varepsilon_{ij}(\mathbf{v}_\tau)\varepsilon_{kl}(\mathbf{w}_\tau)\,dx = \int_\Omega \Phi \cdot \mathbf{w}_\tau\,dx \quad \forall \mathbf{w}_\tau \in \mathbf{V}_\tau. \qquad (7)$$

### C.7 Tensor averaging procedures

On $T_h$, we define the tensor averaging transformation **G$_h$** mapping the tensor of the finite element approximation **u$_h$**

$$\varepsilon(u_h)=[\frac{1}{2}(\frac{\partial u_h^i}{\partial x_j} + \frac{\partial u_h^j}{\partial x_i})]_{i,j=1}^{d}, \qquad (8)$$

which is a constant $d \times d$ matrix over each element of the finite element mesh, into a $d \times d$ matrix-valued continuous piecewise affine function

$$G_h(\varepsilon(u_h)) = [G_h^{i,j}(\varepsilon(u_h))]_{i,j=1}^{d}, \qquad (9)$$

by setting each its nodal value as the mean value of $\varepsilon(\mathbf{u_h})$ on all elements of the patch $\mathbf{P}(x_*)$ associated with corresponding node $x_*$ in the mesh $T_h$.

More precisely, let $x_*$ be one of nodes of finite element mesh $T_h$, and let $T_1, ..., T_{N_{x_*}}$ form the patch $\mathbf{P}(x_*)$ (cf. Fig. 2). Then, we define for $i,j=1,...,d$,

$$G_h^{i,j}(\varepsilon(\mathbf{u_h}))(x_*) = \frac{1}{N_{x_*}} \sum_{T_m \in \mathbf{P}(x_*)} \frac{1}{2}(\frac{\partial u_h^i}{\partial x_j}\big|_{T_m} + \frac{\partial u_h^j}{\partial x_i}\big|_{T_m}), \qquad (10a)$$

or

$$G_h^{i,j}(\varepsilon(\mathbf{u_h}))(x_*) = \frac{1}{measT_1 + ... + measT_{N_{x_*}}} \sum_{T_m \in \mathbf{P}(x_*)} measT_m \cdot \frac{1}{2}(\frac{\partial u_h^i}{\partial x_j}\big|_{T_m} + \frac{\partial u_h^j}{\partial x_i}\big|_{T_m}). \qquad (10b)$$

Having $G_h^{i,j}(\varepsilon(\mathbf{u_h}))$ defined at all nodes of the mesh $T_h$, we uniquely define continuous piecewise affine function $G_h^{i,j}(\varepsilon(\mathbf{u_h}))$ over the whole domain $\Omega$. In this way, the matrix-valued continuous piecewise affine function $\mathbf{G_h}(\varepsilon(\mathbf{u_h}))$ in (9) is built.

Similarly, on $T_\tau$, we define the tensor averaging transformation $\mathbf{G}_\tau$ mapping the tensor of the finite element approximation $v_\tau$

$$\varepsilon(v_\tau) = [\frac{1}{2}(\frac{\partial v_\tau^i}{\partial x_j} + \frac{\partial v_\tau^j}{\partial x_i})]_{i,j=1}^d, \qquad (11)$$

which is a $d \times d$ constant matrix over each element of the finite element mesh, into a $d \times d$ matrix-valued continuous piecewise affine function

$$G_\tau(\varepsilon(v_\tau)) = [G_\tau^{i,j}(\varepsilon(v_\tau))]_{i,j=1}^d, \qquad (12)$$

by setting each its nodal value as the mean value of $\nabla\mathbf{v}_\tau$ on all elements of the patch $\mathbf{P}(x_o)$ associated with corresponding node $x_o$ in the mesh $T_\tau$.

More precisely, let $x_o$ be one of nodes of finite element mesh $T_\tau$, and let $T_1, ..., T_{N_{x_*}}$ form the patch $\mathbf{P}(x_o)$. Then, we define for $i, j = 1,...,d$

$$G_\tau^{i,j}(\varepsilon(\mathbf{v}_\tau))(x_o) = \frac{1}{N_{x_o}} \sum_{T_m \in \mathbf{P}(x_o)} \frac{1}{2}(\frac{\partial v_\tau^i}{\partial x_j}\big|_{T_m} + \frac{\partial v_\tau^j}{\partial x_i}\big|_{T_m}), \qquad (13a)$$

or

$$G_\tau^{i,j}(\varepsilon(\mathbf{v}_\tau))(x_o) = \frac{1}{measT_1 + ... + measT_{N_{x_o}}} \sum_{T_m \in \mathbf{P}(x_o)} measT_m \cdot \frac{1}{2}(\frac{\partial v_\tau^i}{\partial x_j}\big|_{T_m} + \frac{\partial v_\tau^j}{\partial x_i}\big|_{T_m}). \qquad (13b)$$

Having $G_\tau^{i,j}(\varepsilon(v_\tau))(x_o)$ at all nodes $x_o$, we uniquely define continuous piecewise affine function $\mathbf{G}^{i,j}(\varepsilon(\mathbf{v}_\tau))$ over the whole domain $\Omega$. In this way, the vector-valued continuous piecewise affine function $\mathbf{G}_\tau(\varepsilon(\mathbf{v}_\tau))$ in (12) is built.

**C.8 Formula for calculation of the estimator**

Our method estimates the quantity (6) by the quantity $E(\mathbf{u_h}, \mathbf{v}_\tau)$ given by the following formula:

$$E(u_h, v_\tau) := E_0(u_h, v_\tau) + E_1(u_h, v_\tau), \qquad (14)$$

where

$$\mathbf{E}_0(\mathbf{u_h}, \mathbf{v}_\tau) = \int_\Omega \mathbf{f} \cdot \mathbf{v}_\tau \, dx + \int_{\Gamma_2} \mathbf{g} \cdot \mathbf{v}_\tau \, ds - \int_\Omega \sum_{i,j,k,l=1}^{d} L_{ijkl} \varepsilon_{ij}(\mathbf{u_h}) \varepsilon_{kl}(\mathbf{v}_\tau) \, dx, \qquad (15)$$

and

$$\mathbf{E}_1(\mathbf{u_h}, \mathbf{v}_\tau) = \int_\Omega \sum_{i,j,k,l=1}^{d} L_{ijkl} \left( \varepsilon_{ij}(\mathbf{u_h}) - G_h^{i,j}(\varepsilon(\mathbf{u_h})) \right) \left( \varepsilon_{kl}(\mathbf{v}_\tau) - G_\tau^{k,l}(\varepsilon(\mathbf{v}_\tau)) \right) dx. \qquad (16)$$

The functional $\mathbf{E}(\mathbf{u_h}, \mathbf{v}_\tau)$ is directly computable once the approximations $\mathbf{u_h}$ and $\mathbf{v}_\tau$ are found.

**C.9 ERROR ESTIMATION ALGORITHM**

The algorithm is similar as that one presented in Section B9.

**D - ADVANTAGES OF THE TECHNIQUE PRESENTED WITH RESPECT TO OTHERS AVAILABLE IN THE LITERATURE**

In the available scientific literature, several methods of computer verification of the accuracy of approximate solutions in terms of "problem-oriented" criteria has been presented. The main advantages of our method with respect to others can be summarized as follows:

- the estimator contains an extra term, $E_0$, which is directly computable and contains major part of the error;
- the second term is effectively estimated by means of computationally cheap procedure of "gradient-averaging";
- the estimator is valid for a wide spectrum of approximations including the case when the meshes for the original and auxiliary (adjoint) problems are different.

**II IMPLEMENTATION IN A SYSTEM**

A Introduction

Now we describe how the method can be implemented in hardware, software, firmware or combinations thereof, particularly in the form of engineering software. Actually, the nature of the proposed methodology allows a development of the program block "CHECKER", Fig. 13, which can be easily incorporated in or added in some way to the most of the existing commercial software packages using finite element method as a main computational tool (e. g., Matlab®, ADINA®; ANSYS®, MATHCAD®). To illustrate that we shall use the PDE Toolbox of Matlab® package, especially designed for obtaining the numerical solutions for various classes of boundary-value and initial boundary-value problems.

Thus, using the PDE Toolbox subroutines we have developed a new software, which can help the users of Matlab® not only to calculate numerical solutions for the boundary-value problems, but also effectively estimate their accuracy. Naturally all necessary routines could be integrated into one software package.

B SOFTWARE PRODUCT AND ITS USAGE

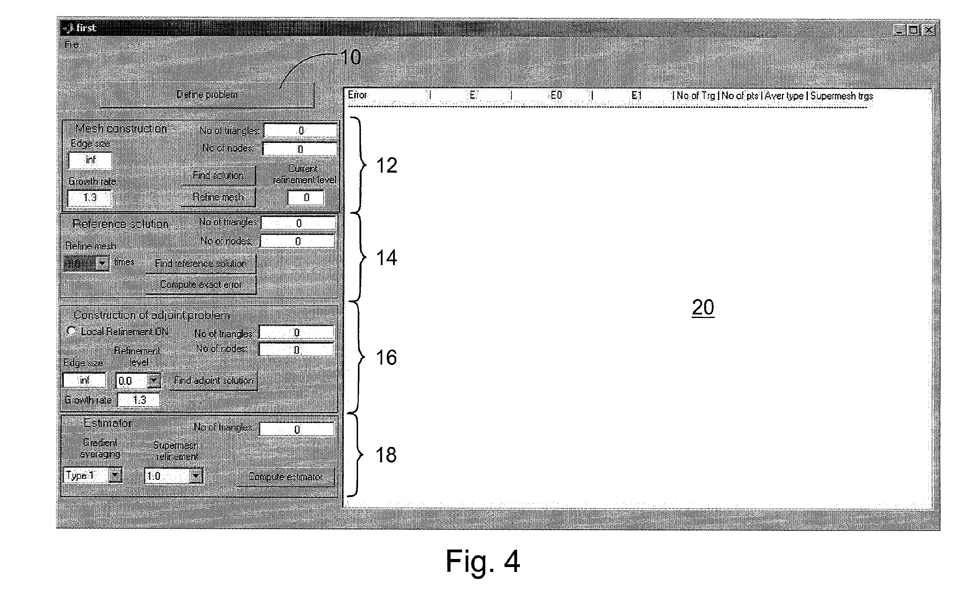

Figure 4 presents a layout of desktop of the software in a graphical user interface (GUI) and on a display. The desktop (control panel) contains six main blocks: "Define problem" - block 10, "Mesh construction" - block 12, "Reference solution" - block 14, "Construction of adjoint problem" - block 16, "Estimator" - block 18, "Table" - block 20. The software works in a standard PC having processing unit, program and data memory (RAM and hard disk), keyboard, mouse and display. The operating system is Microsoft® Windows, but the software can be implemented in other operating systems, too.

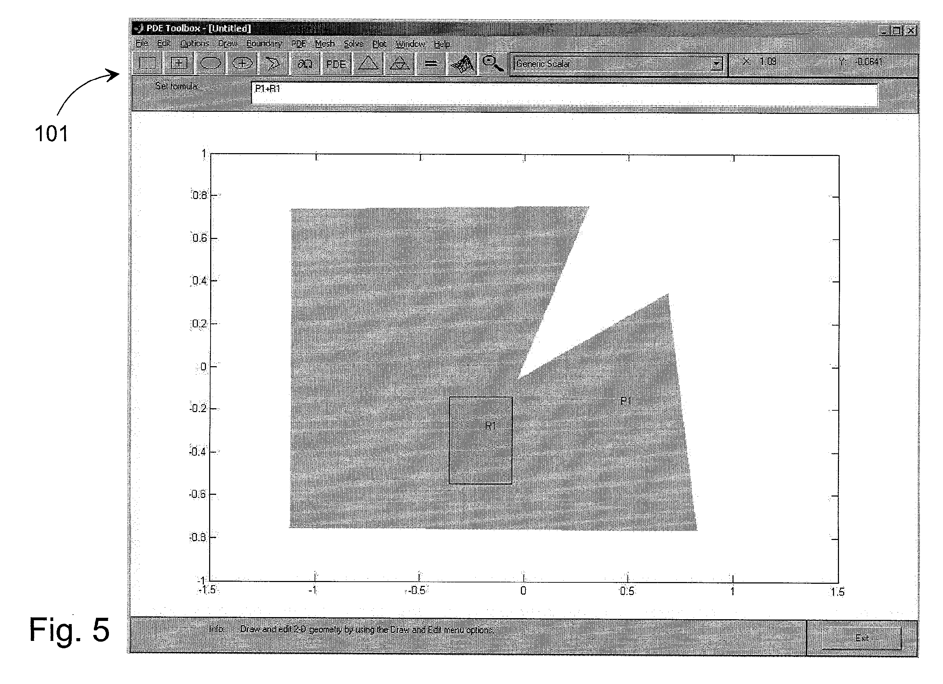

Block 10 calls the PDE Toolbox main window (Figure 5) for setting the problem: defining the solution domain, zone of interest, boundary conditions, coefficients, source function, which are exported later to our software, step A in Figure 18.

Block 12 is used for a construction of the first mesh using mesh specification parameters of PDE Toolbox of Matlab® such as maximum edge size, growth rate and PDE Toolbox of Matlab® grid generator. The block 12 calls FE-solver of PDE Toolbox for finding the first finite element approximation, step B.

Block 14 is optional for finding the error (brute force method) if the user has time enough and computer resources for it.

Block 16 is used to construct the second mesh and find the second finite element approximation for the adjoint problem, step C. It calls PDE Toolbox of Matlab® grid generator and its FE-solver for refining the second mesh in the zone of interest and also globally in the whole solution domain and computing the second approximation, step D.

Blocks 12, 14, and 16 have special fields, where the parameters of corresponding meshes such as number of triangles and number of nodes are displayed.

Block 18 is designed to compute the estimator (E), step E. There is a possibility of choosing the type of gradient averaging and a parameter for calculating the integrals in the estimator (E), the number of triangles in the mesh used to calculate the estimator is shown in a special field. Steps 5 - 9 of paragraph B.9 form step E here.

Block 20 is a table designed to show the results of calculations and values of different parameters used in the processes of calculations. If user considers an error being too large, he or she can recomputed with changed initial parameters (STEP F1 or F2).

Referring now to Figure 5, the solution domain and the zone of interest are set defining their geometry on the desktop of the PDE Toolbox. The coefficients and the source function are set in a known manner with the PDE Toolbox's facilities by using its panel buttons or drop menus.

The solution domain presents here a thin plate, which is heated overall by a constant heat source ($f = 10$ everywhere). The material of the plate is assumed to be homogeneous so that we can take the diagonal diffusion coefficients to be equal to 1, and the off-diagonal coefficients to be equal to 0. For simplicity, we assume that we have homogeneous Dirichlet boundary condition only, i.e., the temperature is assumed to be zero over the boundary of the plate. The temperature distribution in this plate can be described then by the following BVP

$$-\frac{\partial^2 u}{\partial x_1^2} - \frac{\partial^2 u}{\partial x_2^2} = 10 \text{ in } \Omega,$$

$u = 0$ on $\Gamma$

The knowledge of the temperature, especially at some critical areas, is very important for making the right design solutions, which can save, e.g., material resources or help to improve the geometry of the plate. In the domains like we are dealing with now which have concavity in the boundary, such critical area is neighbourhood of concavity point, which dictated our choice of the zone of interest.

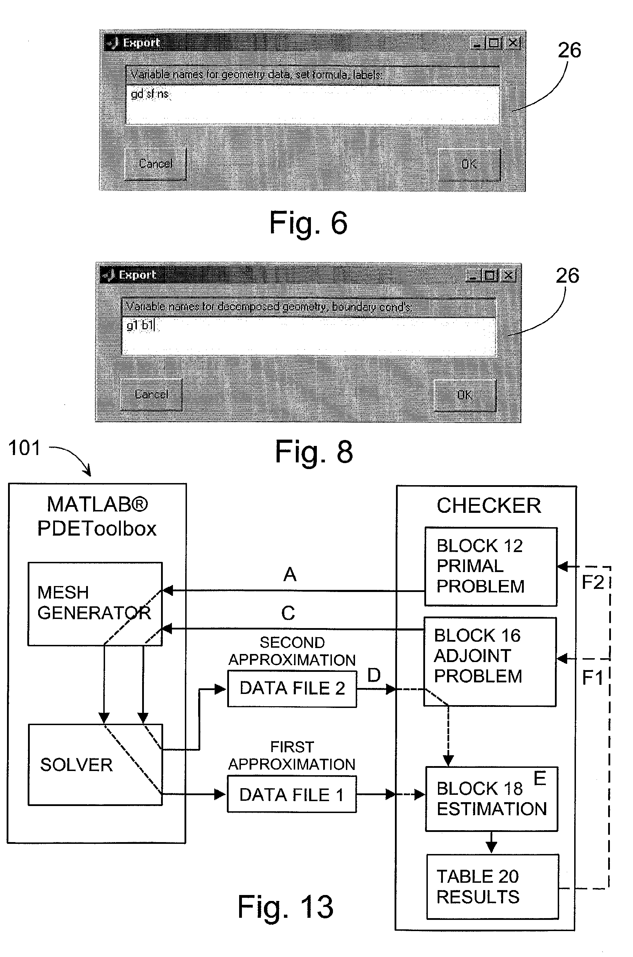

After the setting of the problem, all the date of the problem are exported to our software, Figure 6 shows PDE Toolbox's export window 26. Parameters gd refers to "geometry data", sf refers to "set formula", and ns refers to "labels"

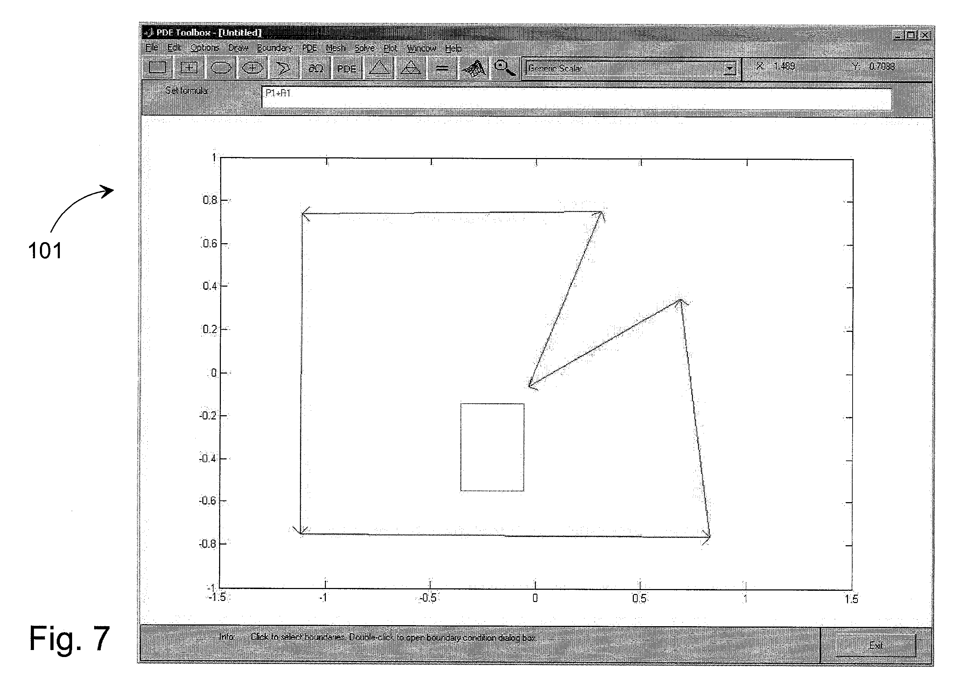

Figure 7 presents setting the boundary conditions using the Matlab® PDE Toolbox's means.

Figure 8 presents exporting the decomposed geometry and boundary conditions to CHECKER software using the export window 26.

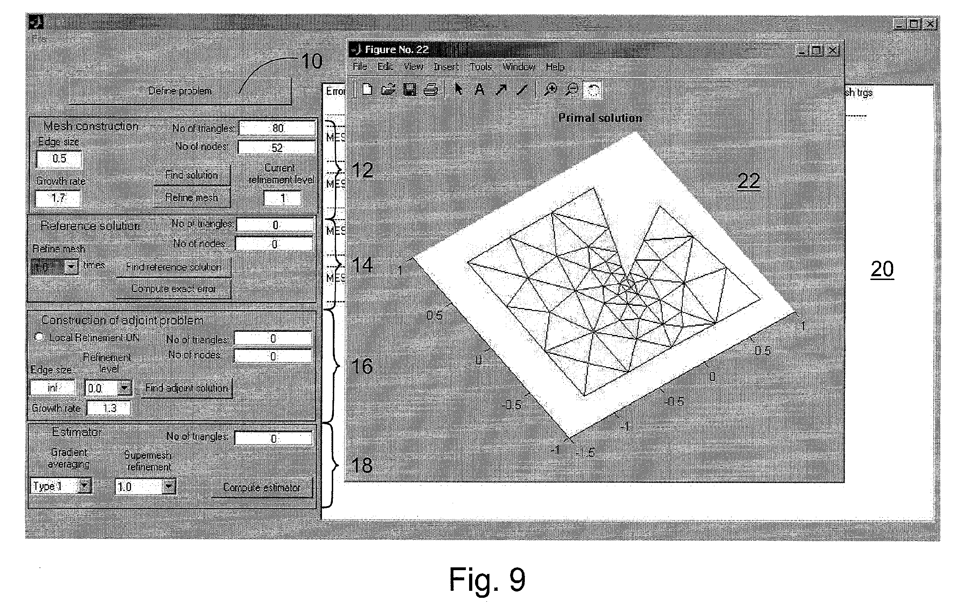

The export functions used in Figures 6 and 8 are provided by Matlab® PDE Toolbox.

After the previously defined data have been exported to the CHECKER software, the first finite element approximation (Primal Solution) is calculated using Block 12. The result of calculations is shown in a new popup window 22, which presents the 3D visualization of the approximate solution. The used mesh can be obtained (see Figure 9) by rotating the 3D visualization.

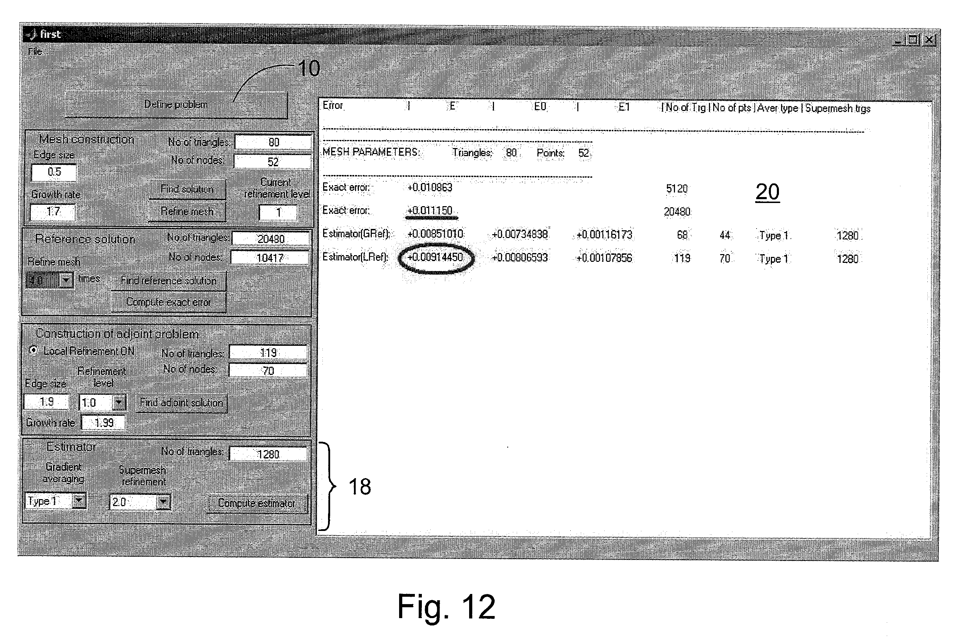

Block 14 by brute force method computes the reference solution on very fine mesh and tries to find the exact value of the problem-oriented criterion. This brute force method is not advisable for using in the engineering practice since it takes a large amount of computational time and memory. The brute force methods may require 100 times computer resources (processor speed, processing time and memory) as the new method herein described. The reference solution here is computed only for an illustration of the invention as it gives a more or less reliable reference result. The results of performance of Block 14 are shown in Table 20 in Figure 12 ("exact error"). Ordinary user does not need Block 14.

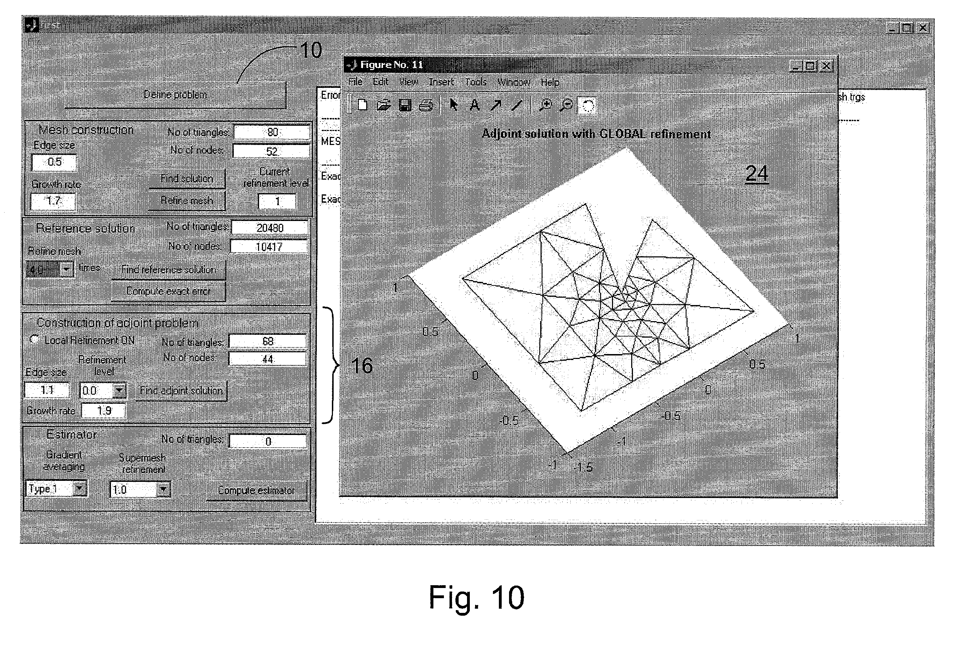

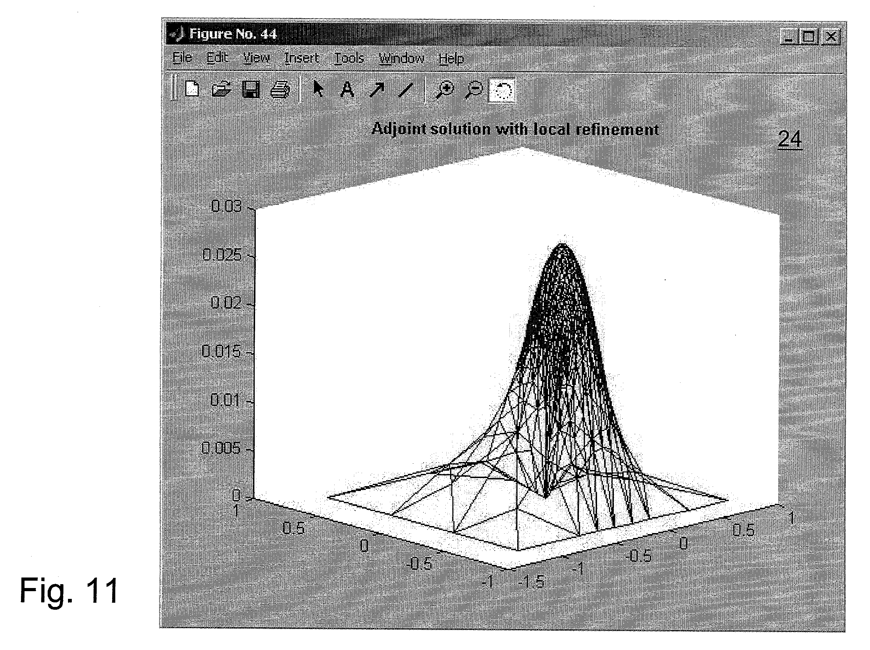

Block 16 constructs the adjoint mesh and solves the adjoint problem (with PDE Toolbox). In the present implementation the function (φ) in the adjoint problem is set by default to 1 in the zone of interest and zero outside of it. Further implementation will make it possible to set the function (φ) arbitrarily, which can help to analyse critical areas more carefully. Figure 10 shows the results of calculations of the adjoint problem in a new pop-up window 24 similarly to Figure 9. In Block 16 we have also a possibility to construct another adjoint mesh condensed in the zone of interest and make new calculations, which is shown in 3D visualization in Figure 11.

After putting window 24 to the background we can make visible the table 20 with the results of all previous calculations (Figure 12).

All the blocks compute all the approximate solutions and the estimator using formulas as described above. Block 12 computes the first finite element approximation. Block 16 computes the second finite element approximation (for the adjoint/auxiliary problem). Block 18 computes the value of the estimator using the invented formula.

After getting the result user is able to consider if the estimator shows that the first approximation isn't enough accurate, he/she can change initial parameters and recompute a new approximation and a new estimator.

### III MODEL EXAMPLE - ONE DIMENSIONAL CASE

The model depicts a heated rod, which is insulated but heated on its length. The rods ends are kept in zero temperature. The heating is defined by the source function. The designer gets advantage when he/she is able to compute temperature distribution more accurately and computationally cheaper in critical area.

We begin with forming a simple problem: find the function $u$ such that

$$-u''(x) = f(x) \text{ in } \Omega = (0,1), \tag{1}$$

$$u(0) = u(1) = 0, \tag{2}$$

where

$$f(x) = \begin{cases} 2\alpha \quad exp\left(\dfrac{1}{s^2} - \dfrac{1}{p}\right) \cdot [-2(x-x_0)^2 + 4p(x-x_0)^2 + p^2] \cdot \dfrac{1}{p^4}, \\ \\ \quad\quad\quad\quad\quad \text{if } x \in (a,b) \subset (0,1), \\ 0, \quad\quad\quad\quad\quad\quad\quad \text{otherwise}, \end{cases}$$

$p = s^2 - (x-x_0)^2$, $s = \frac{1}{2}(b-a)$, $x_0 = \frac{1}{2}(a+b)$, and $\alpha$ is a positive real number.) Here a, b are coordinates of two sides of the rod. f(x) is a function that has a meaning of "heating function". It shows the amount of heat given to each elementary part of the rod. x is a coordinate changing along the rod, $x_0$ is a central point inside (a,b). s, p, and $\alpha$ are positive parameters that define the shape of f(x). It should be noted that such a form of "f" is taken only for a particular example. u(x) has a meaning of the temperature of the rod at point x

Figure 14 presents the shape of the source function. The exact solution of problem (1)-(2) is

$$u(x) = \begin{cases} \alpha \cdot exp\left(\dfrac{1}{s^2} - \dfrac{1}{p}\right), & \text{if } x \in (a,b) \subset (0,1), \\ \\ \quad\quad 0, & \text{otherwise}. \end{cases}$$

The exact and approximate solutions of problem (1)-(2) (full line) and the zone of interest (dotted line) are marked in Figure 15.

As a quantity of interest, we take the following integral

$$\int_0^1 \varphi(x)\,(u(x)-u_h(x))\,dx, \tag{3}$$

where

$$\varphi(x) = \begin{cases} 1, & \text{if} \quad x \in (z_1, z_2), \\ 0, & \text{otherwise.} \end{cases}$$

In what follows, $M$ denotes the number of elements in the mesh for the primal problem, $N$ stands for the number of elements in the mesh used for the corresponding adjoint problem. In all the tests below, $M = 8$, $a = 0$, $b = 1.0$, and $\alpha = 1.0$.

1. Adjoint Problem is solved on uniformly refined meshes

First, we present the results of numerical experiments where the uniform meshes are used, i.e., $h=1/M$ and $\tau=1/N$.

**Example 1.** In this series of numerical tests, $(z_1,z_2)=(0.375,0.625)$ (cf. Figure 15).

In Table I, we present the numerical results for problem (1)-(2) with $M = 8$ and $N = k \cdot M$, $k = 2,3,4,5,6,7,8$.

Table I.

| The results of performance of the estimator $E$ for Example 1. | | | | | | |
|---|---|---|---|---|---|---|
| M | N | $E_0$ | $E_1$ | $E$ | criterion | $I_{eff}$ |
| 8 | 16 | 0.00693883 | 0.00238174 | 0.00932058 | 0.00921705 | 1.01123239 |
| 8 | 24 | 0.00820668 | 0.00098981 | 0.00919649 | 0.00921705 | 0.99776967 |
| 8 | 32 | 0.00864915 | 0.00053743 | 0.00918658 | 0.00921705 | 0.99669427 |
| 8 | 40 | 0.00885372 | 0.00033653 | 0.00919025 | 0.00921705 | 0.99709278 |
| 8 | 48 | 0.00896479 | 0.00023026 | 0.00919505 | 0.00921705 | 0.99761349 |
| 8 | 56 | 0.00903174 | 0.00016737 | 0.00919911 | 0.00921705 | 0.99805336 |
| 8 | 64 | 0.00907518 | 0.00012710 | 0.00920229 | 0.00921705 | 0.99839820 |

The last column of the table presents the so-called "effectivity index", which is often used to give a normalized measure of the quantity of error estimation. In our case, this index is computed as follows:

$$I_{eff} = \frac{|E(u_h, v_\tau)|}{|\int_0^1 \varphi(x)(u(x)-u_h(x))dx|} \tag{4}$$

The dependence of $I_{eff}$ on the number $k$ is presented on Figure 16.

It is easy to see that the estimator $E$ works quite well even for very modest values of $N$.

2. Adjoint Problem is solved on condensed meshes

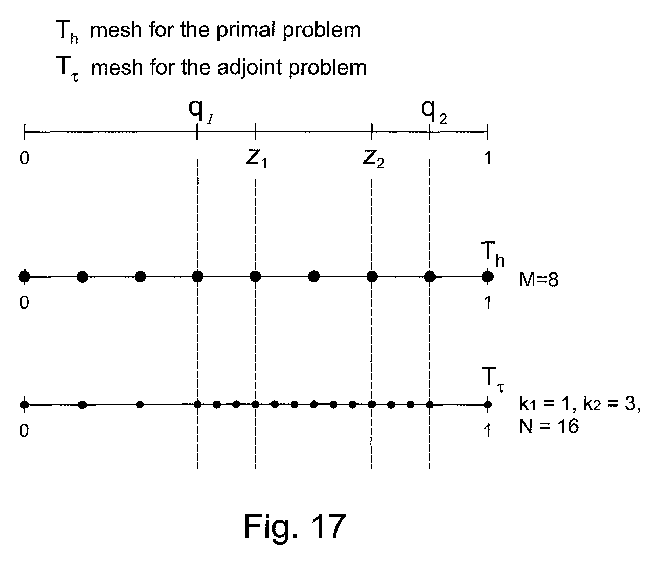

In this subsection, we present the results of numerical experiments, where the mesh used for solving the adjoint problem is condensed around the "zone of interest" $(z_1, z_2)$. As before, $h = 1/M$. Now, we are aimed to show that to have a good quality of the error estimation it is not necessarily required to also use globally refined meshes for the adjoint problem. We find that essentially the same result can be obtained on the mesh refined only in the "zone of interest" (i.e., we have less degrees of freedom and, thus, save computational costs). Thus, in the tests of Example 2, the mesh $T_\tau$ is only refined in a certain interval $(q_1, q_2)$ that contains $(z_1, z_2)$. To numerically qualify the respective meshes, we introduce positive numbers $M_i$, $i = 1,2,3$, that correspond to the number of elements in the mesh for the primal problem in the intervals $(0, q_1)$, $(q_1, q_2)$, and $(q_2, 1.0)$, respectively. The numbers of elements in the mesh used for the adjoint problem in the intervals $(0, q_1)$, $(q_1, q_2)$, and $(q_2, 1.0)$ are defined in terms of two positive numbers $k_1$ and $k_2$ as follows - $M_1 \cdot k_1$, $M_2 \cdot k_2$, and $M_3 \cdot k_1$, respectively. Thus, the density of the mesh used for the adjoint problem with respect to the mesh used for the primal problem inside the interval $(q_1, q_2)$ is given by $k_2$, and outside of the interval $(q_1, q_2)$ - by $k_1$. Evidently, the total number of elements in the mesh used for the adjoint problem is given by $N = M_1 \cdot k_1 + M_2 \cdot k_2 + M_3 \cdot k_1$, see Figure 17, showing meshes $T_h$ and $T_\tau$ used for problem (1) - (2).

**Example 2.** We take $(z_1, z_2) = (0.500, 0.750)$ and $(q_1, q_2) = (0.375, 0.875)$. The results of the tests for various values of $k_i$ are presented in Table II.

Table II.

| | | | | | | | | | |
|---|---|---|---|---|---|---|---|---|---|
| The results of performance of the estimator $E$ for Example 2. | | | | | | | | | |
| $M_1$ | $M_2$ | $M_3$ | $k_1$ | $k_2$ | $M$ | $N$ | $E$ | criterion | $I_{eff}$ |
| 3 | 4 | 1 | 3 | 3 | 8 | 24 | 0.00495048 | 0.00500423 | 0.98925780 |
| 3 | 4 | 1 | 2 | 3 | 8 | 20 | 0.00495048 | 0.00500423 | 0.98925777 |
| 3 | 4 | 1 | 1 | 3 | 8 | 16 | 0.00495048 | 0.00500423 | 0.98925773 |
| 3 | 4 | 1 | 1 | 2 | 8 | 12 | 0.00493566 | 0.00500423 | 0.98629572 |
| 6 | 8 | 2 | 3 | 3 | 16 | 48 | 0.00122594 | 0.00122749 | 0.99873983 |
| 6 | 8 | 2 | 2 | 3 | 16 | 40 | 0.00122594 | 0.00122749 | 0.99873972 |
| 6 | 8 | 2 | 1 | 3 | 16 | 32 | 0.00122594 | 0.00122749 | 0.99873956 |
| 6 | 8 | 2 | 1 | 2 | 16 | 24 | 0.00123056 | 0.00122749 | 1.00249939 |

We see that the quality of the error estimation remains quite good even if $\frac{M}{N} = 1.5$, what shows the effectivity of local mesh refinement in the "zone of interest".

Referring now to Figure 12 to the results exposed in the table 20 we clearly observe good performance of the estimator for two dimensional problems. The "exact error" is based on the reference solution computed by brute force method used instead of the exact solution. The "exact error" means the relevant quantity of interest computed by the same formula (4) as presented paragraph B.3.

In the above examples the models depict diffusion type processes, which arise often in various engineering applications. A typical diffusion process is heat propagation inside a body. So that physically our examples can be considered as problems on the distribution of a heat inside a body with given temperature at the boundary and a certain distribution (f) of the heat source. It is worth outlining that the algorithm suggested is applicable not only to such type of problems, but for all other physical models that can be described in terms of linear elliptic equations (e.g., linear elasticity, electrostatic problems, certain models in the theory of plates and shells). We refer to diffusion type problems as to a simple and transparent example.

References:

[1] I. Babuška, T. Strouboulis.
The Finite Element Method and its Reliability,

Oxford University Press Inc., New York, 2001.

[2] R.Becker, R.Rannacher.
A feed-back approach to error control in finite element methods: Basic approach and examples.
East-West J. Numer. Math., 4, 237--264, 1996.

[3] S.Korotov, P.Neittaanmäki, S.Repin.
A posteriori error estimation of goal-oriented quantities by the superconvergence patch recovery.
J. Numer. Math. 11, 33--59, 2003.

[4] J. T. Oden, S. Prudhomme.
Goal-oriented error estimation and adaptivity for the finite element method.
Comput. Math. Appl., 41, 735--756, 2001.

[5] R.Verfürth.
A review of a posteriori error estimation and adaptive mesh-refinement techniques},
Wiley-Teubner, 1996.

**Claims**

1. Method for verification of the accuracy of numerical data measured in terms of given problem-oriented criteria, where the numerical data are computed in the process of solution of a boundary value problem, which is defined by one or several partial differential equations (PDEs), governing an unknown physical quantity ($u$) in a solution domain, and containing a set of given coefficients, describing physical properties the media, and a given source function ($f$), and two types of boundary conditions, where the first type, called the Dirichlet boundary condition, prescribes a behaviour of the physical quantity ($u$) on the first part of a boundary of the solution domain, called the Dirichlet boundary ($\Gamma_1$), by a given function ($u_0$), and the second type, called the Neumann boundary condition, prescribes a behaviour of partial derivatives of the physical quantity ($u$) on the second part of the boundary of the solution domain, called the Neumann boundary ($\Gamma_2$) by a given boundary function ($g$), and where the Dirichlet boundary and the Neumann boundary do not intersect and their union forms the solution domain boundary ($\Gamma$) containing steps of

   a) forming a primal problem and finding its finite element approximation, called as the first approximation($u_h$), using a standard finite element mesh, called as the first mesh ($T_h$), and the first set of basic functions ($w_h$), thus obtaining said numerical data, and

   b) defining a problem-oriented criterion by choosing a zone of interest ($\omega$) in the solution domain ($\Omega$) and a weight function ($\varphi$) defined in the zone of interest, and

   c) forming an auxiliary problem, using the zone of interest ($\omega$) and the weight function ($\varphi$), and finding its finite element approximation, called as the second approximation ($v_\tau$), using another standard finite element mesh, called as the second mesh ($T_\tau$), non-coinciding with the first mesh ($T_h$), and the second set of basic functions ($w_\tau$), obtaining the second set of numerical data, and then

   d) computing an estimator (E) for the problem-oriented criterion using the given data, the said data and the second set of data.

2. Method according to claim 1, **characterized in that** the estimator (E) is a sum of the first term ($E_0$) and the second term ($E_1$), where

   a) the first term ($E_0$) is computable as a sum of three parts, where the first part is an integral over the solution domain ($\Omega$) of a product of the source function ($f$) and the second approximation ($v_\tau$), the second part is an integral over the Neumann boundary ($\Gamma_2$) of a product of the boundary function ($g$) and the second approximation ($v_\tau$), and the third part is a minus integral over the solution domain ($\Omega$) of an energy scalar products of the gradients of the first ($u_h$) and the second ($v_\tau$) approximations, and
   b) the second term ($E_1$) is the integral over the solution domain ($\Omega$) of the energy scalar product of two vector-functions, where the first vector-function is the difference between the gradient of the first approximation ($u_h$)

and the averaged gradient of the first approximation ($u_h$), and the second vector-function is the difference between the gradient of the second approximation ($v_\tau$) and the averaged gradient of the second approximation ($v_\tau$).

3. Method for verification of the accuracy of numerical data on a digital computer, said digital computer comprising at least one central processing unit, memory, an input device and an output device, and where the numerical data are computed using finite element method (FEM) and in the process of solution of a boundary value problem (BVP), called as a primal problem, as the first approximation and BVP comprising at least one partial differential equation (PDE), a set of given coefficients, a given source function, and boundary conditions, the method comprising;

- setting data defining said BVP into the memory;
- setting the first parameters for a mesh, called the first mesh, into the memory;
- computing the first approximation and obtaining said numerical data and saving this data into the memory;
- selecting the parameters of a second mesh, and the parameters of the quantity of interest these forming an auxiliary problem with the PDE and saving these parameters into the memory;
- computing the solution of the auxiliary problem and thus obtaining the second approximation and saving it into the memory as the second numerical data;
- computing an error estimator using the set data, the first numerical data and second numerical data and presenting the computed estimator using the output device.

4. Method according to claim 3, **characterized in that** a graphical user interface (GUI) is used to control the setting steps and computing steps.

5. Method according to claim 3 or 4, **characterized in that** a separate software is formed having an interface with an existing FEM-software used for generating at least one mesh and for computing at least one approximation.

6. Method according to any of claims 3 - 5, **characterized in that** at least one mesh is formed using a grid generator.

7. Method according to any of claims 3 - 6, **characterized in that** at least one approximation is computed using a FE-solver.

8. Method according to claim 8, **characterized in that** the GUI is provided with control blocks for setting data for the primal and auxiliary problems.

9. Method according to claim 8, **characterized in that** the GUI is provided with a table for showing the result.

10. Method according to claim 7, **characterized in that** a gradient of the first approximation, an averaged gradient of the first approximation, a gradient of the second approximation and an averaged gradient of the second approximation are computed, when computing the error estimator.

11. A digital computer system programmed to perform method of claim 3.

12. A computer-readable medium storing computer program implementing the method of claim 3.

Fig. 1

Fig. 2

Fig. 3

Fig. 4

Fig. 5

Fig. 6

Fig. 8

Fig. 13

Fig. 7

Fig. 9

Fig. 10

Fig. 11

EP 1 467 287 A2

first

File

Define problem

10

Mesh construction
Edge size
0.5
Growth rate
1.7

No of triangles: 80
No of nodes: 52

Find solution
Refine mesh

Current refinement level
1

Reference solution
Refine mesh
4.0 times

No of triangles: 20480
No of nodes: 10417

Find reference solution
Compute exact error

Construction of adjoint problem
Local Refinement ON
Refinement level
Edge size
1.9   1.0
Growth rate 1.99

No of triangles: 119
No of nodes: 70

Find adjoint solution

Estimator
Gradient averaging
Supermesh refinement
Type 1   2.0

No of triangles: 1280

Compute estimator

18

| Error | | E | | E0 | | E1 | No of Trg | No of pts | Aver type | Supermesh trgs |
|---|---|---|---|---|---|---|---|---|---|---|---|
| MESH PARAMETERS: | Triangles: 80 | Points: 52 | | | | | | | |
| Exact error: | +0.010863 | | | | | 5120 | | 20 | |
| Exact error: | +0.011150 | | | | | 20480 | | | |
| Estimator(GRef): | +0.00851010 | +0.00734838 | +0.00116173 | | | 68 | 44 | Type 1 | 1280 |
| Estimator(LRef): | +0.00914450 | +0.00806593 | +0.00107856 | | | 119 | 70 | Type 1 | 1280 |

Fig. 12

Fig. 14

Fig. 15

Fig. 16

$T_h$ mesh for the primal problem

$T_\tau$ mesh for the adjoint problem

Fig. 17

START

A — 
- SET PARAMETERS FOR THE PRIMAL
  PROBLEM (coefficients, source function, domain)
- SET PARAMETERS FOR THE FIRST MESH
- SAVE SET DATA (1)

B — 
- GENERATE THE FIRST MESH
- SOLVE THE FIRST APPROXIMATION $U_h$
- SAVE DATA  (FILE 1)

C — 
- SET PARAMETERS FOR THE AUXILIARY
  PROBLEM (zone of interest, weight function)
- SET PARAMETERS FOR THE SECOND MESH
- SAVE SET DATA (2)

D — 
- GENERATE THE SECOND MESH
- SOLVE THE SECOND APPROXIMATION $V_\tau$
- SAVE SET DATA (FILE 2)

E — 
- COMPUTE ESTIMATION $E (U_h, V_\tau)$
  USING SAVED DATA (FILES 1 & 2)

F1, F2 — 
- OPTIONAL RECOMPUTING WITH CHANGED
  INITIAL PARAMETRS
  (TO STEP A OR C)

Fig. 18